# EUROPÄISCHE PATENTSCHRIFT

(11) **EP 2 629 020 B1**
(45) Veröffentlichungstag und Bekanntmachung des Hinweises auf die Patenterteilung: **26.05.2021**
(21) Anmeldenummer: 13154545.1
(22) Anmeldetag: 08.02.2013
(51) Int. Cl.: F24D 11/02, F24D 19/10, F24D 3/08

(54) **Heizsystem und Verfahren zu dessen Betrieb**
Heating system and method for its operation
Système de chauffage et son procédé de fonctionnement

(30) Priorität: 16.02.2012 DE 102012202375
(43) Veröffentlichungstag der Anmeldung: 21.08.2013
(73) Patentinhaber: Daikin Europe N.V., 8400 Oostende (BE)
(72) Erfinder: Grammling, Franz, Dr., 74336 Brackenheim (DE)
(74) Vertreter: Hoffmann Eitle

(56) Entgegenhaltungen:
- EP-A2- 1 710 512
- EP-A2- 2 325 567
- WO-A1-2011/129248
- AT-A1- 507 710
- US-A1- 2005 022 542

## Beschreibung

Die Erfindung betrifft eine Heizsystem für ein Gebäude mit einem ein Wärmespeichermedium, insbesondere Wasser enthaltenden Speicherbehälter, einem in dem Speicherbehälter in Wärmeleitkontakt mit dem Wärmespeichermedium angeordneten Behälterwärmetauscher, einem außerhalb des Speicherbehälters angeordneten Wärmeerzeuger und einem über einen Wärmeübertrager thermisch an den Wärmeerzeuger ankoppelbaren, von einem Wärmeträgerfluid durchströmbaren Heizpfad zur Gebäudeheizung. Die Erfindung betrifft weiter ein Verfahren zum Betrieb eines solchen Heizsystems.

Aus der EP-A 2 325 567 ist ein Heizungssystem und Verfahren gemäß der Präambel der Ansprüche 1 bzw. 10 bekannt. Dort wird durch ein zentrales Tauchrohr in einem Speicherbehälter eine separate Tauchrohrzone von der umgebenden Speicherzone physikalisch getrennt, um das Wärmespeichermedium auf verschiedenen Temperaturniveaus be- und entladen zu können. Hierfür sind neben dem Tauchrohr zusätzliche Wärmetauscher und Isolierungen erforderlich, die einen erheblichen Bauaufwand verursachen und das Speichervolumen minimieren.

Ausgehend hiervon liegt der Erfindung die Aufgabe zugrunde, die im Stand der Technik bekannten Systeme und Verfahren weiter zu verbessern und bei einfachem Aufbau einen möglichst energieeffizienten, zuverlässigen und komfortablen Betrieb sowohl hinsichtlich der Heizwasser- als auch Brauchwassererwärmung zu ermöglichen.

Zur Lösung dieser Aufgabe wird die im Patentanspruch 1 bzw. 10 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, anstelle einer physikalischen Zonentrennung in einem Speicherbehälter durch eine Mischregelung das Zusammenspiel der Systemkomponenten zu optimieren. Dementsprechend wird erfindungsgemäß vorgeschlagen, eine Strömungsregeleinrichtung einzusetzen, die zur Durchleitung eines geregelten Zweig- bzw. Teilstroms des durch den Heizpfad zirkulierten Wärmeträgerfluids über den Behälterwärmetauscher eingerichtet bzw. betriebsfähig ist. Damit ist es möglich, aus dem Speicherbehälter nach Maßgabe der Betriebsbedingungen gezielt Wärme abzuschöpfen, indem der Zweigstrom im Verhältnis zu einem an dem Behälterwärmetauscher vorbeigeleiteten Reststrom entsprechend reguliert wird. Der Zweigstrom oder der Reststrom kann dabei gegen nahe Null reduziert werden. Auch für die Beladung des Speicherbehälters können zur Verfügung stehende Wärmeerzeuger effizient eingesetzt werden, wobei die Speicherfunktion auch eine zeitliche Entkopplung im Zusammenwirken von Wärmeerzeuger und Wärmeverbraucher ermöglicht. Zudem wird eine erhebliche Reduzierung des Material- und Herstellungsaufwands gegenüber bisherigen Systemen erreicht. Dabei ist es auch möglich, verschiedene Wärmequellen (z.B. Wärmepumpe, Holz-, Gas- oder Ölkessel, Solarenergie) zur Unterstützung der Heizung einfach einzubinden und ggf. zu kombinieren.

Erfindungsgemäß weist die Strömungsregeleinrichtung eine in einem Regelkreis arbeitende elektronische Regeleinheit zur Ansteuerung eines den Zweigstrom regulierenden Stellglieds auf. Damit können komplexe Betriebsbedingungen in dem Regelablauf berücksichtigt werden.

Eine weitere Verbesserung in dieser Hinsicht wird dadurch erreicht, dass die Strömungsregeleinrichtung zur Erfassung einer Regelgröße für die Regulierung des Zweigstroms einen in dem Speicherbehälter und/oder dem Heizpfad angeordneten Temperaturfühler und/oder einen Durchflussmengenfühler für das Wärmeträgerfluid aufweist.

Um eine Beimischschaltung zu realisieren weist die Strömungsregeleinrichtung ein Mischventil, insbesondere einen Dreiwegemischer, als Stellglied auf, und das Mischventil weist einen mit dem Behälterwärmetauscher verbundenen ersten Ventileinlass, einen mit einem den Behälterwärmetauscher überbrückenden Bypass verbundenen zweiten Ventileinlass und einen mit dem Vorlauf des Heizpfades verbundenen oder verbindbaren Ventilauslass auf.

Vorteilhafterweise wird der Zweigstrom über eine dem Wärmeübertrager nachgeordnete Abzweigstelle zu dem Behälterwärmetauscher geführt.

Um eine gezielte Speicherbeladung zu ermöglichen, ist es von Vorteil, wenn der Behälterwärmetauscher über ein Wegeventil unter Überbrückung des Heizpfades in einem Kurzschlusskreislauf mit dem Wärmeübertrager verbindbar ist.

Gemäß einer bevorzugten Ausgestaltung der Erfindung ist der Wärmeerzeuger durch eine Wärmepumpe gebildet, die in einem Wärmeerzeugerkreis zur Durchleitung eines Arbeitsfluids mit dem vorzugsweise als Plattenwärmetauscher ausgebildeten Wärmeübertrager verbunden ist. Die Wärmepumpe kann als Split-Luft/Wasser-Wärmepumpe ein luftführendes Außenteil und ein im Gebäude aufstellbares Innengerät aufweisen. Durch die vereinfachte und geregelte Be- und Entladung des Speicherbehälters kann der Betrieb der Wärmepumpe optimal an die wechselnden Umgebungsbedingungen angepasst werden.

Eine weitere bevorzugte Ausgestaltung sieht vor, dass in dem Speicherbehälter eine elektrische Heizeinheit, insbesondere ein Elektroheizstab angeordnet ist. Dadurch lässt sich eine deutliche Komforterhöhung erreichen, da eine Mindesttemperatur des Brauchwassers durch einen elektrischen Backup mittels des Heizstabs automatisch gesichert ist. Zugleich kann auf eine separate elektrische Nachladeeinrichtung für die Warmwasserbereitung verzichtet werden, so dass auch die erforderlichen Stromleistungs-Anschlusswerte erniedrigt werden. Im Backup-Betrieb lassen sich auch hohe Speichertemperaturen beispielsweise für eine Anti-Legionellen-Aufheizung erreichen.

Besondere Vorteile vor allem hinsichtlich der Brauchwasserqualität und vereinfachten Einbindung von Wärmequellen lassen sich dadurch erreichen, dass der Speicherbehälter zur drucklosen Aufnahme des Wärmespeichermediums ausgebildet ist und einen Brauchwasserwärmetauscher zur Erwärmung von durchlaufendem Brauchwasser mittels des Wärmespeichermediums aufweist. Alternativ ist es auch möglich, dass der Speicherbehälter als Druckbehälter zur Aufnahme von Brauchwasser als Wärmespeichermedium ausgebildet ist, wobei das Brauchwasser aus einem Wasserversorgungsnetz unter Druck in den Speicherbehälter einspeisbar ist. Vorteilhafterweise enthält die Strömungsregeleinrichtung eine Software zur Kontrolle einer zeitversetzten Wärmebeladung und Entladung des Speicherbehälters nach Maßgabe von Betriebsparametern und/oder Umgebungsbedingungen, so dass beispielsweise der momentane Wirkungsgrad des eingesetzten Wärmeerzeugers entsprechend berücksichtigt werden kann.

In verfahrensmäßiger Hinsicht wird die eingangs genannte Aufgabe durch die Merkmale in Anspruch 10 gelöst. Damit werden die eingangs für die Vorrichtung genannten Vorteile gleichermaßen erreicht.

Vorteilhafterweise wird der über einen Behälterwärmetauscher in dem Speicherbehälter geführte Zweigstrom unterbrochen, wenn die Temperatur des Wärmespeichermediums unter eine Mindesttemperatur fällt, so dass die Brauchwassertemperatur hinreichend erhalten bleibt.

Eine weitere vorteilhafte Maßnahme besteht darin, dass der Zweigstrom so geregelt wird, dass die aus dem Wärmespeichermedium entnommene Wärmemenge durch einen an den Speicherbehälter angeschlossenen Wärmeerzeuger unter Erhaltung einer Mindesttemperatur in das Wärmespeichermedium wieder eintragbar ist. Auf diese Weise wird eine ausgeglichene Wärmebilanz in dem Speicherbehälter erreicht.

Eine besonders vorteilhafte Ausgestaltung sieht vor, dass zum Abtauen des als Wärmepumpe ausgebildeten Wärmeerzeugers intermittierend Wärme aus dem Speicherbehälter entnommen wird, wobei der Heizbetrieb je nach Bedarf mittels des Speicherbehälters aufrechterhalten oder unterbrochen wird.

Im Folgenden wird die Erfindung anhand der in der Zeichnung in schematischer Weise dargestellten Ausführungsbeispiele näher erläutert. Es zeigen:
- Fig. 1: ein Heizsystem bzw. eine Heizanlage für ein Gebäude zur kombinierten Heiz- und Brauchwassererwärmung in einem Blockschaltbild;
- Fig. 2: eine weitere Ausführungsform eines Gebäudeheizsystems mit druckbeladenen Warmwasserspeicher.

Das in der Zeichnung dargestellte Heizsystem dient zur Erwärmung sowohl von Heizwasser als auch von Brauchwasser in einem Gebäude. Es umfasst einen Speicherbehälter 10 zur Aufnahme von Speicherwasser als Wärmespeichermedium 12, einen in dem Speicherbehälter 10 angeordneten Behälterwärmetauscher 14 zum Wärmeaustausch in dem Wärmespeichermedium 12, einen außerhalb des Speicherbehälters angeordneten Wärmeerzeuger 16, einen über einen Wärmeübertrager 18 thermisch an den Wärmeerzeuger 16 ankoppelbaren, von Heizwasser als Wärmeträgerfluid durchströmbaren Heizpfad 20 und eine Strömungsregeleinrichtung 22, die im Heizbetrieb einen geregelten Zweig- bzw. Teilstroms des in dem Heizpfad 20 zirkulierten Heizwassers durch den Behälterwärmetauscher 14 hindurchleitet und somit eine gezielte Versorgung des Heizpfades bzw. der Wärmeverbraucher mit Speicherwärme ermöglicht.

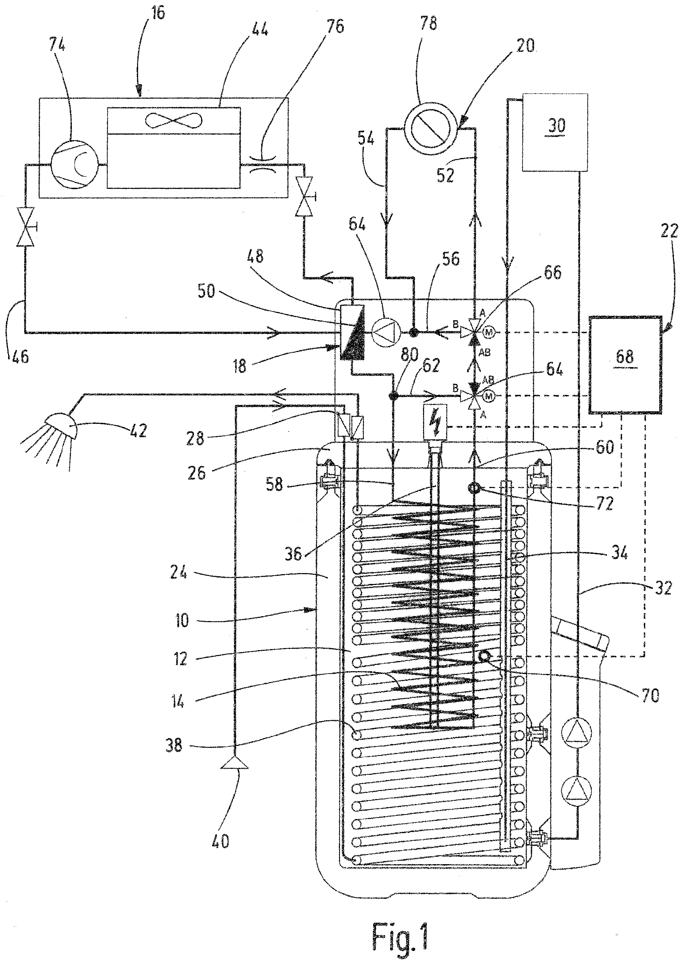

Bei dem in Fig. 1 gezeigten Ausführungsbeispiel ist der Speicherbehälter 10 durch einen drucklos gehaltenen wärmeisolierten Behältertopf 24 gebildet, der an einer nach oben weisenden Öffnung durch ein Deckelteil 26 schließbar ist. Darauf befindet sich ein Deckelkasten 28, in dem verschiedene Systemkomponenten fest installiert sind, wie es nachstehend näher erläutert wird. Der Speicherbehälter 10 bedarf keiner besonderen Strukturfestigkeit, weil das Speicherwasser 12 allein zur Wärmespeicherung dient und ohne Betriebsüberdruck gegenüber Atmosphäre vorgehalten wird.

Als zusätzlicher externer Wärmeerzeuger kann ein Solarkollektor 30 über einen Vorlauf 32 aus einem Kaltsumpf des Speicherbehälters 10 auf niedrigem Temperaturniveau angekoppelt werden, während der drucklose Rücklauf über ein Schichtungsrohr 34 gebildet wird, welches über einen unteren Abschnitt verteilte Ausströmöffnungen aufweist, um das solar erwärmte Speicherwasser entsprechend der Temperaturschichtung in dem Speicherbehälter 10 höhenvariabel einzuschichten.

Zur direkten internen Wärmeeinspeisung greift ein mittels der Regeleinrichtung 22 ansteuerbarer Elektroheizstab 36 von der Deckelseite her zentral in den Speicherbehälter 10 ein.

Ein in der Nähe der Umfangswand des Speicherbehälters 10 schraubenförmig über dessen Höhe verlaufende Brauchwasserwärmetauscher 38 besteht aus einem Edelstahl-Rohrregister, das von Speicherwasser 12 umgeben ist und vom Brauchwasser über einen Netzanschluß 40 zu einem Verbraucher 42 hin nach Art eines Durchlauferhitzers durchströmbar ist. Dabei weist das Rohrregister ein geeignetes Rohrvolumen von beispielsweise 50 Liter auf, so dass ständig ausreichend Warmwasser gezapft werden kann.

Der primäre externe Wärmeerzeuger 16 ist als Wärmepumpe ausgebildet, die vorzugsweise als Split-Luft/Wasser-Wärmepumpe mit ihrer Umweltwärme aufnehmenden Verdampfer- bzw. Außeneinheit 44 über einen Wärmeerzeugerkreis 46 mit dem Wärmeübertrager 18 verbunden ist. Der Wärmeübertrager 18 ist innerhalb des Gebäudes, aber außerhalb des Wärmespeichermediums 12 zweckmäßig in dem Deckelkasten 28 auf dem Speicherbehälter 10 angeordnet. Er enthält die Verflüssigereinheit 48 der Wärmepumpe 16 und einen Plattenwärmetauscher 50, der sekundärseitig für einen Wärmeeintrag wahlweise an den Heizpfad 20 und den Behälterwärmetauscher 14 ankoppelbar ist.

Zu diesem Zweck umfasst eine hydraulische Schaltung einen Heizvorlauf 52, Heizrücklauf 54 und Heiz-Bypass 56 des Heizpfades 20, des Weiteren einen Wärmetauschervorlauf 58, Wärmetauscherrücklauf 60 und Wärmetauscher-Bypass 62 des Behälterwärmetauschers 14, eine dem Plattenwärmetauscher 50 sekundärseitig vorgeordnete Umwälzpumpe 64, ein 3-Wege Mischventil 64 und ein 3-Wege Umschaltventil 66. Die Ventile 64, 66 lassen sich als Stellglieder über eine elektronische Regeleinheit 68 der Regeleinrichtung 22 ansteuern. Die Regeleinheit 68 arbeitet dabei in einem geschlossenen Regelkreis, indem über einen Temperaturfühler 70 die Temperatur des Speicherwassers 12 und/oder über einen Durchflussmengenfühler 72 der Mengenstrom des Heizwassers als Regelgröße erfasst wird.

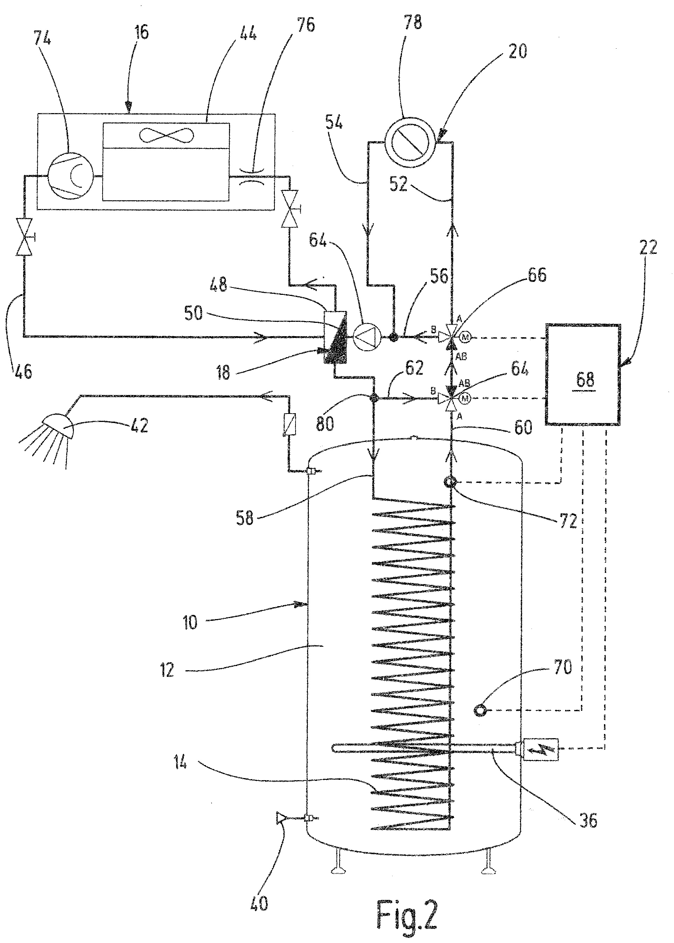

In dem Ausführungsbeispiel nach Fig. 2 sind gleich oder ähnliche Teile mit denselben Bezugszeichen wie vorstehend beschrieben versehen. Ein wesentlicher Unterschied besteht darin, dass der Speicherbehälter 10 als Druckbehälter ausgeführt ist, wobei das enthaltene Speicherwasser 12 als Brauchwasser aus einem Wasserversorgungsnetz unter Druck zugeleitet wird und über einen Druckanschluss an einen Verbraucher 42 abgegeben werden kann. Somit kann auf einen Brauchwasserwärmetauscher verzichtet werden, wobei jedoch die Nachteile eines Druckbehälters hinsichtlich der Brauchwasserqualität (z.B. Kalk, Keime) und des erschwerten Anschlusses von Systemkomponenten in Kauf zu nehmen sind.

Gemäß den vorstehenden Erläuterungen ergeben sich folgende Betriebsmöglichkeiten des Heizsystems nach Fig. 1 bzw. 2:
Im Arbeitsbetrieb der Wärmepumpe 16 wird in der Verdampfereinheit 44 dem Arbeitsmittel Umweltwärme zugeführt, so dass dieses aufgrund seines niedrigen Siedepunkts vom flüssigen in den gasförmigen Aggregatzustand übergeht. Das mittels elektrisch angetriebener Pumpe 74 unter Temperaturerhöhung verdichtete Arbeitsmittel wird in Pfeilrichtung durch den Wärmeerzeugerkreis 46 zu der Verflüssigereinheit 48 transportiert. Dort kann die Wärmeenergie über den Plattenwärmetauscher 50 an dessen Sekundärseite auf das durchströmende Heizwasser abgegeben werden. Das dabei verflüssigte Arbeitsmittel wird anschließend im Expansionsventil 76 dekomprimiert und dabei abgekühlt, so dass der Kreislauf 46 geschlossen wird und eine Wärmeaufnahme wieder möglich ist.

In einem Ladebetrieb kann die Wärmepumpe 16 zur Aufheizung des Speicherwassers 12 genutzt werden. Durch die Regeleinheit 68 wird hierfür das Umschaltventil 66 in die Stellung AB-B geschaltet und das Mischventil 64 auf einen Hauptstrom über den Zweig A-AB eingestellt. Auf diese Weise wird das Heizwasser von dem Plattenwärmetauscher 50 über den Behälterwärmetauscher 14 und den Heiz-Bypass 56 mittels Pumpe 64 zirkuliert und das Speicherwasser 12 erwärmt.

In einem Heizbetrieb kann die Wärmepumpe 16 zum Heizen unter Zuschaltung des Heizpfads 20 genutzt werden. Hierfür wird das Umschaltventil 66 in die Stellung AB-A gebracht, so dass der Heiz-Bypass 56 abgesperrt wird und das erwärmte Heizwasser in den Heizvorlauf 52 eingespeist wird. Je nach momentanem Wirkungsgrad der Wärmepumpe 16 und Wärmebedarf der Verbraucher 78 im Heizpfad kann der Wärmeinhalt des Speicherwassers 12 zur Heizungsunterstützung ausgenutzt werden. Hierzu wird das Mischventil 64 über die elektronische Regeleinheit 68 so angesteuert, dass ein Teilstrom des Heizwassers über den Behälterwärmetauscher 14 geleitet wird, während der verbleibende Bypassstrom von der Abzweigstelle 80 über den Wärmetauscher-Bypass 62 fließt. Das Beimischverhältnis der Ströme B-AB und A-AB wird durch die entsprechende Zwischenstellung des Mischventils 64 eingestellt. Dabei kann der Teilstrom A-AB gegen Null reduziert werden, wenn die mittels Temperaturfühler 70 erfasste Speicherwassertemperatur unter eine vorbestimmte Mindesttemperatur fällt, um sicherzustellen, dass immer hinreichend warmes Brauchwasser in dem Brauchwasserwärmetauscher 38 zur Verfügung steht.

Umgekehrt kann der Bypassstrom über den Pfad B-AB des Mischventils 64 gegen Null reguliert werden, wenn die Wärmepumpe 16 momentan mit schlechtem Wirkungsgrad arbeitet bzw. nicht genügend Wärme liefert. In diesem Fall kann auch der elektrische Heizstab 36 für einen Backup-Betrieb mittels der Regeleinrichtung 22 angesteuert werden, um das Heizwasser 12 direkt aufzuheizen. Die entnommene Wärmemenge kann über den Durchflussmengenfühler 72 erfasst werden und durch Regelung des Beimischverhältnisses des Mischventils 64 auf den durch den Heizstab 36 ermöglichten Wärmeeintrag begrenzt werden. Die Wärmeentnahme aus dem Speicherwasser 12 kann dabei mittels der Regeleinrichtung 22 je nach Betriebszustand gleitend angepasst werden. Beispielsweise könnte beim Zapfen von Brauchwasser die Wärmeentnahme für die Heizung entsprechend abgeschwächt werden, um zu verhindern, dass der Wärmespeicher zu rasch entladen wird.

Beispielsweise sollte bei einer Heizleistung des Heizstabs 36 von 10kW die Wärmeentnahme auf maximal 10kW begrenzt werden, solange das Speicherwasser 12 auf einer Soll-Temperatur bleibt. Wenn diese Temperatur aber überschritten wird, beispielsweise durch zusätzlichen Energieeintrag über weitere Wärmeerzeuger wie Solaranlage oder Holzkessel, dann kann die Entnahme auch über 10 kW hinausgehen. Umgekehrt, wenn Wärme durch Zapfen von Brauchwasser entnommen wird, beispielsweise beim Duschen oder Baden, was bis zu 30kW betragen kann, sollte die Entnahme für Heizzwecke deutlich unter 10kW reduziert werden, damit die Soll-Temperatur des Speicherwassers möglichst erhalten bleibt. Dabei ist auch zu beachten, dass die Wärmepumpe 16 im Wirkungsgrad temperatursensibel ist, während dies für den Heizstab 36 nicht zutrifft. Deswegen sollten also die hohen Temperaturen möglichst mit dem Heizstab 36 und die niederen mit der Wärmepumpe 16 erzeugt werden. Eine solche komplexe Ablaufsteuerung lässt sich durch eine entsprechende Software-Routine der Regeleinrichtung 68 verwirklichen.

Mittels der Regeleinrichtung 22 lässt sich auch ein "intelligentes Speichermanagement" mit einer Zeitverschiebung zwischen Ladebetrieb bzw. Backup-Betrieb und durch den Speicherbehälter 10 gestütztem Heizbetrieb realisieren. Beispielsweise kann der Ladebetrieb mittels Wärmepumpe 16 oder der Backup-Betrieb mittels Heizstab 36 in solcher Zeiten erfolgen, in denen (aufgrund der Umgebungstemperaturen) ein optimaler Wirkungsgrad der Wärmepumpe 16 erreicht wird oder elektrische Energie kostengünstig angeboten wird, während die eingespeicherte Wärme dann später im Heizbetrieb wieder aus dem Wärmespeichermedium 12 bedarfsgerecht entnommen wird.

Ein weiterer Vorteil des Speicherbehälters 10 liegt darin, dass die Wärmeentnahme bedarfsgesteuert bzw. moduliert erfolgen kann, wohingegen der Heizstab 36 an sich nicht moduliert und beim Zuschalten mit voller Nennleistung heizt (Ein/Aus-Betrieb).

Die im Ladebetrieb mit der Wärmepumpe 16 praktisch erreichbare Speicherwassertemperatur ist begrenzt und liegt beispielsweise bei 55°C. Im Backup-Betrieb können aber mittels des Heizstabs 36 höhere Temperaturen von beispielsweise 65°C erreicht werden, so dass Keime bzw. Legionellen abgetötet werden.

Die energieeffizient in das Speicherwasser 12 eingebrachte Wärmeenergie kann auch vorteilhaft für einen Abtaubetrieb der Wärmepumpe 52 bei tiefen Außentemperaturen genutzt werden. Zum Abtauen wird im Speicherwasser 12 gespeicherte Wärme gegebenenfalls unter Überbrückung des Heizkreises (Umschaltventil 66 in Stellung AB-B) abgeholt und über den Plattenwärmetauscher 50 entgegen der regulären Durchgangsrichtung primärseitig übertragen. Dabei wird in dem Wärmepumpenkreislauf 46 die Strömungsrichtung durch Umsteuern der Pumpe 74 umgekehrt, so dass ein Durchfluss entgegen der gezeigten regulären Strömungsrichtung erfolgt und die in dem Arbeitsmittel transportierte Wärme unter Prozessumkehr zum kurzfristigen Abtauen der vereisten Verdampfereinheit 44 genutzt werden kann.

Wenn der Heizpfad 20 momentan keinen für den Abtaubetrieb erforderlichen Mindestdurchfluss besitzt, beispielsweise wenn alle Verbraucher 78 abgesperrt sind, kann durch die Überbrückung des Heizkreises 20 in der Schaltstellung AB-B des Umschaltventils 66 dennoch ein Einfrieren und eine mögliche Beschädigung, z.B. Platzen des Plattenwärmetauschers 50 zuverlässig verhindert werden. Auch hierbei lässt sich die erforderliche Wärmeentnahme aus dem Wärmespeicher durch das Mischventil 64 einstellen, wobei kurzzeitig beispielsweise 10kW abgenommen werden können.

Weiterhin kann auch während der Abtauphase eine Heizungsunterbrechung vermieden werden, indem in der Stellung AB-A des Umschaltventils 66 und weitgehender Absperrung des Wärmetauscher-Bypass 62 durch das Mischventil 64 die Wärmeentnahme aus dem Speicherbehälter 10 entsprechend hochgefahren wird, beispielsweise auf 20kW für einige Minuten, so dass das Heiznetz 20 hinreichend mit Wärme versorgt und dem Plattenwärmetauscher 50 dennoch genügend Wärme zugeführt wird, um den Abtauprozess der Außeneinheit 44 entsprechend den Anforderungen zu unterstützen. Auf diese Weise kann insbesondere verhindert werden, dass als Gebläsekonvektoren ausgebildete Verbraucher 78 während der Abtauphase unangenehme Kaltluft abgeben.

## Patentansprüche

1. Heizsystem für ein Gebäude mit
einem ein Wärmespeichermedium (12), insbesondere Wasser, enthaltenden Speicherbehälter (10),
einem in dem Speicherbehälter (10) in Wärmeleitkontakt mit dem Wärmespeichermedium (12) angeordneten Behälterwärmetauscher (14),
einem außerhalb des Speicherbehälters (10) angeordneten Wärmeerzeuger (16) und
einem über einen Wärmeübertrager (18) thermisch an den Wärmeerzeuger (16) ankoppelbaren, von einem Wärmeträgerfluid durchströmbaren Heizpfad (20) zur Gebäudeheizung,
**gekennzeichnet durch**
eine Strömungsregeleinrichtung (22), die zur Durchleitung eines geregelten Zweigstroms des durch den Heizpfad (20) strömenden Wärmeträgerfluids über den Behälterwärmetauscher (14) eingerichtet ist,
wobei die Strömungsregeleinrichtung (22) aufweist:
ein Mischventil (64) und
eine in einem Regelkreis arbeitende elektronische Regeleinheit (68) zur Ansteuerung des Mischventils (64),
wobei das Mischventil (64) einen mit dem Behälterwärmetauscher (14) verbundenen ersten Ventileinlass, einen mit einem den Behälterwärmetauscher (14) überbrückenden Bypass (62) verbundenen zweiten Ventileinlass und einen mit dem Vorlauf (52) des Heizpfades (20) verbundenen oder verbindbaren Ventilauslass aufweist, wobei
das Mischventil (64) über die elektronische Regeleinheit (68) in eine Zwischenstellung so ansteuerbar ist, dass ein Teilstrom des Wärmeträgerfluids als Zweigstrom über den Behälterwärmetauscher (14) geleitet wird, während der verbleibende Reststrom über den Bypass (62) fließt.

2. Heizsystem nach Anspruch 1, **dadurch gekennzeichnet, dass** die Strömungsregeleinrichtung (22) zur Erfassung einer Regelgröße einen in dem Speicherbehälter (10) und/oder dem Heizpfad (20) angeordneten Temperaturfühler (70) und/oder einen Durchflussmengenfühler (72) für das Wärmeträgerfluid aufweist.

3. Heizsystem nach einem der Ansprüche 1 bis 2, **dadurch gekennzeichnet, dass** der Zweigstrom über eine dem Wärmeübertrager (18) nachgeordnete Abzweigstelle (80) zu dem Behälterwärmetauscher (14) geführt ist.

4. Heizsystem nach einem der Ansprüche 1 bis 3, **dadurch gekennzeichnet, dass** der Behälterwärmetauscher (14) über ein Wegeventil (66) unter Überbrückung des Heizpfades (20) in einem Kurzschlusskreislauf mit dem Wärmeübertrager (18) verbindbar ist.

5. Heizsystem nach einem der Ansprüche 1 bis 4, **dadurch gekennzeichnet, dass** der Wärmeerzeuger (16) durch eine Wärmepumpe gebildet ist, die in einem Wärmeerzeugerkreis (46) zur Durchleitung eines Arbeitsfluids mit dem vorzugsweise als Plattenwärmetauscher ausgebildeten Wärmeübertrager (18) verbunden ist.

6. Heizsystem nach einem der Ansprüche 1 bis 5, **dadurch gekennzeichnet, dass** in dem Speicherbehälter (10) eine elektrische Heizeinheit (36), insbesondere ein Elektroheizstab angeordnet ist.

7. Heizsystem nach einem der Ansprüche 1 bis 6, **dadurch gekennzeichnet, dass** der Speicherbehälter(10) zur drucklosen Aufnahme des Wärmespeichermediums (12) ausgebildet ist und einen Brauchwasserwärmetauscher (38) zur Erwärmung von Brauchwasser mittels des Wärmespeichermediums (12) aufweist.

8. Heizsystem nach einem der Ansprüche 1 bis 6, **dadurch gekennzeichnet, dass** der Speicherbehälter (10) als Druckbehälter zur Aufnahme von Brauchwasser als Wärmespeichermedium (12) ausgebildet ist, wobei das Brauchwasser aus einem Wasserversorgungsnetz (40) unter Druck in den Speicherbehälter (10) einspeisbar ist.

9. Heizsystem nach einem der Ansprüche 1 bis 8, **dadurch gekennzeichnet, dass** die Strömungsregeleinrichtung (22) eine Software zur Kontrolle einer zeitversetzten Wärmebeladung und Entladung des Speicherbehälters (10) nach Maßgabe von Betriebsparametern und/oder Umgebungsbedingungen aufweist.

10. Verfahren zum Betrieb eines Gebäudeheizsystems, bei dem
in einem Ladebetrieb ein Wärmespeichermedium (12), insbesondere Wasser, in einem Speicherbehälter (10) mittels mindestens eines Wärmeerzeugers (16) erwärmt wird, und
in einem Heizbetrieb ein Wärmeträgerfluid durch einen Heizpfad (20) zur Gebäudeheizung hindurchgeleitet wird, **dadurch gekennzeichnet, dass**
im Heizbetrieb ein geregelter Zweigstrom des über den Heizpfad (20) geleiteten Wärmeträgerfluids unter Wärmeentnahme aus dem Wärmespeichermedium (12) erwärmt wird,
wobei ein Mischventil (64) über eine elektronische Regeleinheit (68) in eine Zwischenstellung so angesteuert wird, dass der Zweigstrom des Wärmeträgerfluids über den Behälterwärmetauscher (14) geleitet wird, während ein verbleibender Reststrom des Wärmeträgerfluids über einen den Behälterwärmetauscher (14) überbrückenden Bypass (62) fließt.

11. Verfahren nach Anspruch 10, **dadurch gekennzeichnet, dass** der über einen Behälterwärmetauscher (14) in dem Speicherbehälter (10) geführte Zweigstrom unterbrochen wird, wenn die Temperatur des Wärmespeichermediums (12) unter eine Mindesttemperatur fällt.

12. Verfahren nach Anspruch 10 oder 11, **dadurch gekennzeichnet, dass** der Zweigstrom so geregelt wird, dass die aus dem Wärmespeichermedium (12) entnommene Wärmemenge durch einen an den Speicherbehälter (10) angeschlossenen Wärmeerzeuger (16) unter Erhaltung einer Mindesttemperatur in das Wärmespeichermedium (12) eintragbar ist.

13. Verfahren nach einem der Ansprüche 10 bis 12, **dadurch gekennzeichnet, dass** zum Abtauen des als Wärmepumpe ausgebildeten Wärmeerzeugers (16) intermittierend Wärme aus dem Speicherbehälter (10) entnommen wird, wobei der Heizbetrieb je nach Bedarf mittels des Speicherbehälters (10) aufrecht erhalten oder unterbrochen wird.

## Claims

1. Heating system for a building, comprising a storage tank (10) containing a heat storage medium (12), in particular water,
a tank heat exchanger (14) arranged in the storage tank (10) so as to be in thermally conductive contact with the heat storage medium (12),
a heat generator (16) arranged outside the storage tank (10), and
a heating path (20) for heating a building and which can be thermally coupled to the heat generator (16) via a heat transmitter (18) and through which a heat transfer fluid can flow,
**characterised by**
a flow regulation apparatus (22), which is designed to conduct a regulated branch flow of the heat transfer fluid flowing through the heating path (20) via the tank heat exchanger (14),
wherein the flow regulation apparatus (22) comprises:
a mixing valve (64) and
an electronic control unit (68) operating in a control loop for actuating the mixing valve (64),
wherein the mixing valve (64) comprises a first valve inlet connected to the tank heat exchanger (14), a second valve inlet connected to a bypass (62) that bypasses the tank heat exchanger (14) and a valve outlet that is or can be connected to the feed pipe (52) of the heating path (20), wherein the mixing valve (64) can be actuated into an intermediate position by means of the electronic control unit (68) such that a partial flow of the heat transfer fluid is conducted as a branch flow via the tank heat exchanger (14) while the remaining residual flow flows via the bypass (62).

2. Heating system according to claim 1, **characterised in that** the flow regulation apparatus (22) comprises a temperature sensor (70), which is arranged in the storage tank (10) and/or heating path (20), and/or a flow rate sensor (72) for the heat transfer fluid in order to detect a controlled variable.

3. Heating system according to any of claims 1 to 2, **characterised in that** the branch flow is guided to the tank heat exchanger (14) via a branch-off point (80) arranged downstream of the heat transmitter (18).

4. Heating system according to any of claims 1 to 3, **characterised in that** the tank heat exchanger (14) can be connected to the heat transmitter (18) via a directional valve (66) so as to bypass the heating path (20) in a bypass circuit.

5. Heating system according to any of claims 1 to 4, **characterised in that** the heat generator (16) is formed of a heat pump, which is connected to the heat transmitter (18) preferably designed as a plate heat exchanger in a heat generator circuit (46) for conducting an operating fluid.

6. Heating system according to any of claims 1 to 5, **characterised in that** an electric heating unit (36), in particular an electric heating rod, is arranged in the storage tank (10).

7. Heating system according to any of claims 1 to 6, **characterised in that** the storage tank (10) is designed to receive the heat storage medium (12) in an unpressurised manner and comprises a service water heat exchanger (38) for heating service water by means of the heat storage medium (12).

8. Heating system according to any of claims 1 to 6, **characterised in that** the storage tank (10) is designed as a pressurised tank for receiving service water as the heat storage medium (12), wherein the service water can be fed under pressure into the storage tank (10) from a water supply network (40).

9. Heating system according to any of claims 1 to 8, **characterised in that** the flow regulation apparatus (22) comprises software for controlling delayed thermal loading and unloading of the storage tank (10) in accordance with operating parameters and/or environmental conditions.

10. Method for operating a building heating system, in which
a heat storage medium (12), in particular water, is heated in a storage tank (10) by means of at least one heat generator (16) in a loading mode, and
a heat transfer fluid is conducted through a heating path (20) for heating a building in a heating mode, **characterised in that**
a regulated branch flow of the heat transfer fluid conducted via the heating path (20) is heated by taking heat out of the heat storage medium (12) in the heating mode,
wherein a mixing valve (64) is actuated into an intermediate position by means of an electronic control unit (68) such that the branch flow of the heat transfer fluid is conducted via the tank heat exchanger (14) while a remaining residual flow of the heat transfer fluid flows via a bypass (62) that bypasses the tank heat exchanger (14) .

11. Method according to claim 10, **characterised in that** the branch flow guided via a tank heat exchanger (14) in the storage tank (10) is interrupted if the temperature of the heat storage medium (12) falls below a minimum temperature.

12. Method according to claim 10 or 11, **characterised in that** the branch flow is regulated such that the amount of heat taken out of the heat storage medium (12) can be input into the heat storage medium (12) by means of a heat generator (16) connected to the storage tank (10) so as to maintain a minimum temperature.

13. Method according to any of claims 10 to 12, **characterised in that** heat is intermittently taken out of the storage tank (10) in order to defrost the heat generator (16) designed as a heat pump, wherein the heating mode is maintained or interrupted as needed by means of the storage tank (10).

## Revendications

1. Système de chauffage pour un bâtiment avec
un récipient de stockage (10) contenant un milieu de stockage de chaleur (12), en particulier de l'eau,
un échangeur de chaleur de récipient (14) agencé dans le récipient de stockage (10) en contact thermoconducteur avec le milieu de stockage de chaleur (12),
un générateur de chaleur (16) agencé en dehors du récipient de stockage (10) et un trajet de chauffage (20) pouvant être couplé thermiquement via un transmetteur de chaleur (18) au générateur de chaleur (16), traversable par un fluide caloporteur pour le chauffage du bâtiment,
**caractérisé par**
un appareil de régulation d'écoulement (22), qui est configuré pour la transmission d'un courant de dérivation régulé du fluide caloporteur s'écoulant à travers le trajet de chauffage (20) via l'échangeur de chaleur de récipient (14),
dans lequel l'appareil de régulation d'écoulement (22) présente :
une soupape de mélange (64) et
une unité de régulation (68) électronique travaillant dans un circuit de régulation pour la commande de la soupape de mélange (64),
dans lequel la soupape de mélange (64) présente une première entrée de soupape reliée à l'échangeur de chaleur de récipient (14), une seconde entrée de soupape reliée à une dérivation (62) chevauchant l'échangeur de chaleur de récipient (14) et une sortie de soupape reliée ou pouvant être reliée à la canalisation montante (52) du trajet de chauffage (20), dans lequel la soupape de mélange (64) peut être commandée via l'unité de régulation électronique (68) dans une position intermédiaire de sorte qu'un courant partiel du fluide caloporteur soit conduit en tant que courant de dérivation via l'échangeur de chaleur de récipient (14), pendant que le courant résiduel restant circule via la dérivation (62).

2. Système de chauffage selon la revendication 1, **caractérisé en ce que** l'appareil de régulation d'écoulement (22) présente, pour la détection d'une grandeur de régulation, un capteur de température (70) agencé dans le récipient de stockage (10) et/ou le trajet de chauffage (20) et/ou un capteur de quantité de débit (72) pour le fluide caloporteur.

3. Système de chauffage selon l'une quelconque des revendications 1 à 2, **caractérisé en ce que** le courant de dérivation est guidé via un point de dérivation (80) agencé en aval du transmetteur de chaleur (18) vers l'échangeur de chaleur de récipient (14).

4. Système de chauffage selon l'une quelconque des revendications 1 à 3, **caractérisé en ce que** l'échangeur de chaleur de récipient (14) peut être relié via une soupape de distribution (66) en chevauchant le trajet de chauffage (20) dans un circuit de court-circuit avec le transmetteur de chaleur (18).

5. Système de chauffage selon l'une quelconque des revendications 1 à 4, **caractérisé en ce que** le générateur de chaleur (16) est formé par une pompe à chaleur qui est reliée, dans un circuit de générateur de chaleur (46), pour la transmission d'un fluide de travail, au transmetteur de chaleur (18) réalisé de préférence en tant qu'échangeur de chaleur à plaques.

6. Système de chauffage selon l'une des revendications 1 à 5, **caractérisé en ce qu'**une unité de chauffage (36) électrique, en particulier une barre chauffante électrique est agencée dans le récipient de stockage (10).

7. Système de chauffage selon l'une quelconque des revendications 1 à 6, **caractérisé en ce que** le récipient de stockage (10) est réalisé pour la réception sans pression du milieu de stockage de chaleur (12) et présente un échangeur de chaleur à eau non potable (38) pour le chauffage d'eau non potable au moyen du milieu de stockage de chaleur (12).

8. Système de chauffage selon l'une quelconque des revendications 1 à 6, **caractérisé en ce que** le récipient de stockage (10) est réalisé en tant que récipient de pression pour la réception d'eau non potable en tant que milieu de stockage de chaleur (12), dans lequel l'eau non potable peut être injectée d'un réseau d'alimentation en eau (40) sous pression dans le récipient de stockage (10).

9. Système de chauffage selon l'une quelconque des revendications 1 à 8, **caractérisé en ce que** l'appareil de régulation d'écoulement (22) présente un logiciel pour le contrôle d'une charge thermique décalée dans le temps et la décharge du récipient de stockage (10) conformément à des paramètres de fonctionnement et/ou conditions ambiantes.

10. Procédé de fonctionnement d'un système de chauffage du bâtiment, pour lequel
dans un mode de charge, un milieu de stockage de chaleur (12), en particulier de l'eau, est chauffé dans un récipient de stockage (10) au moyen d'au moins un générateur de chaleur (16), et
dans un mode de chauffage, un fluide caloporteur est guidé à travers un trajet de chauffage (20) pour le chauffage du bâtiment, **caractérisé en ce que**
dans le mode de chauffage, un courant de dérivation régulé du fluide caloporteur guidé via le trajet de chauffage (20) est chauffé par prélèvement de chaleur du milieu de stockage de chaleur (12),
dans lequel une soupape de mélange (64) est commandée par une unité de régulation (68) électronique dans une position intermédiaire de sorte que le courant de dérivation du fluide caloporteur soit conduit via l'échangeur de chaleur de récipient (14), pendant qu'un courant résiduel restant du fluide caloporteur circule via une dérivation (62) chevauchant l'échangeur de chaleur de récipient (14).

11. Procédé selon la revendication 10, **caractérisé en ce que** le courant de dérivation guidé via un échangeur de chaleur de récipient (14) dans le récipient de stockage (10) est interrompu lorsque la température du milieu de stockage de chaleur (12) tombe sous une température minimale.

12. Procédé selon la revendication 10 ou 11, **caractérisé en ce que** le courant de dérivation est régulé de sorte que la quantité de chaleur prélevée du milieu de stockage de chaleur (12) puisse être introduite par un générateur de chaleur (16) raccordé au récipient de stockage (10) en maintenant une température minimale dans le milieu de stockage de chaleur (12).

13. Procédé selon l'une quelconque des revendications 10 à 12, **caractérisé en ce que** pour le dégivrage du générateur de chaleur (16) réalisé en tant que pompe à chaleur, de la chaleur est prélevée par intermittence du récipient de stockage (10), dans lequel le mode de chauffage est maintenu ou interrompu si besoin au moyen du récipient de stockage (10).
